# EUROPÄISCHE PATENTSCHRIFT

(11) **EP 1 524 253 B1**
(45) Veröffentlichungstag und Bekanntmachung des Hinweises auf die Patenterteilung: **20.06.2007**
(21) Anmeldenummer: 04024233.1
(22) Anmeldetag: 12.10.2004
(51) Int. Cl.: C04B 35/83

(54) **Verfahren zur Herstellung von leitfähigen Formteilen**
Process of manufacture of conductive shaped parts
Procédé de fabrication de pièces conductrices

(30) Priorität: 14.10.2003 DE 10347701
(43) Veröffentlichungstag der Anmeldung: 20.04.2005
(73) Patentinhaber: Fraunhofer-Gesellschaft zur Förderung der angewandten Forschung e.V., 80686 München (DE); Tecnaro Gesellschaft zur industriellen Anwendung nachwachsender Rohstoffe mbH, 74360 Ilsfeld (DE)
(72) Erfinder: Kauffmann, Axel Dipl.-Ing., 76327 Pfinztal (DE); Eisenreich, Norbert Dr., 76327 Pfinztal (DE); Weiser, Volker, 76185 Karlsruhe (DE); Eckl, Wilhelm Dipl.-Phys., 76228 Karlsruhe (DE); Inone-Kauffmann, Emilia Regina, 76327 Pfinztal (DE); Pfitzer, Jürgen, 99817 Eisenach-Stockhausen (DE); Nägele, Helmut, 99819 Beuernfeld (DE)

(56) Entgegenhaltungen:
- DE-A- 2 131 792
- US-A- 3 825 460
- US-A- 4 938 942

## Beschreibung

Die Erfindung betrifft ein Verfahren zur Herstellung von zumindest einen Anteil von elementarem Kohlenstoff aufweisenden Formteilen, indem ein Polymer-Formteil aus wenigstens einem Polymer unter Zugabe von natürlichen Verstärkungsfasern sowie gegebenenfalls unter Zusatz von Hilfsstoffen geformt und das Polymer-Formteil anschließend unter zumindest teilweiser Umwandlung seiner Polymermatrix in elementaren Kohlenstoff pyrolysiert wird, wobei die Naturfasern gemeinsam mit der Polymermatrix pyrolysiert werden, und wonach das pyrolysierte Formteil abgekühlt wird.

Formteile mit einem Anteil an elementarem Kohlenstoff in Form von Platten, Profilen oder beliebige andere Strukturen besitzen ein vielfältiges Anwendungsgebiet. So werden solche Formteile aufgrund ihrer elektrischen Leitfähigkeit beispielsweise als Elektroden von Batterien oder Akkumulatoren oder als Bipolarplatten von Brennstoffzellen eingesetzt. Die Herstellung erfolgt in diesem Fall durch Eindispergieren von pulverförmigem Kohlenstoff, z.B. Ruß oder Graphit, entweder in plastifizierte thermoplastische Polymere oder in flüssige duroplastische Polymerharze und anschließende Formgebung der Dispersion mittels bekannter thermoplastischer oder duroplastischer Verarbeitungsverfahren.

Nachteilig ist, daß der Polymeranteil solcher Formteile eine nur geringe oder praktisch gar keine elektrische Leitfähigkeit aufweist, wobei die Leitfähigkeit des Formteils grundsätzlich geringer ist als die Leitfähigkeit des eindispergierten Kohlenstoffes. Andererseits sind dem Kohlenstoffanteil derartiger Polymer-Formteile nach oben hin Grenzen gesetzt, da die mechanische Festigkeit des Formteils mit steigendem Kohlenstoffgehalt drastisch abnimmt. So lassen sich beispielsweise hochgefüllte Polymer-Formteile mit einem Kohlenstoffanteil von 50 bis 60 Mass.-% mit einer Leitfähigkeit von bis zu etwa 100 S/cm herstellen. Indes sind solche Formteile äußerst spröde, wenig abriebfest und sehr empfindlich gegenüber korrosiven Materialien, wie sie als Elektrolytlösungen in Batterien oder Akkumulatoren zwangsläufig eingesetzt werden.

Im Falle eines thermoplastischen Polymerbinders kommt häufig eine unzureichende Temperaturbeständigkeit hinzu, da die Polymere z.B. im Bereich der Betriebstemperaturen von Brennstoffzellen, welche in der Regel etwa 100°C bis 120°C betragen, beginnen, in einen weich-plastischen Zustand überzugehen.

Bei einem anderen bekannten Verfahren zur Herstellung von hochfesten, temperatur- und verschleißunempfindlichen Bauteilen, welche im wesentlichen gänzlich aus Kohlenstoff bestehen, wird natürliches Holz unter Bildung einer offenporigen Kohlenstoffstruktur pyrolysiert. Das pyrolysierte Holz wird anschließend, z.B. durch spanende Bearbeitung, in die gewünschte Form gebracht und mit flüssigem Siliciumdioxid bei einer Temperatur von etwa 1600°C infiltriert. Hierbei werden die Poren mit einer keramikähnlichen Schicht befüllt, welche dem Bauteil die guten mechanischen Eigenschaften bei hoher Temperaturbeständigkeit verleiht.

Zwar lassen sich auf diese Weise hochwertige, sowohl thermisch als auch mechanisch hochbelastbare Bauteile herstellen, doch ist das Verfahren außerordentlich aufwendig und teuer. Insbesondere läßt sich die spanende Bearbeitung des Grundkörpers aus pyrolysiertem Holz praktisch nur manuell durchführen und sind im Falle einer automatisierten Durchführung aufwendige Handhabungsvorgänge, wie das Einspannen der rohen Bauteilen an entsprechenden Werkzeugmaschinen, erforderlich, so daß das bekannte Verfahren letztlich wenig rentabel ist. Ferner sind die äußeren Abmessungen der solchermaßen hergestellten Bauteile durch die Größe des eingesetzten Holzrohlings begrenzt, welcher zudem anläßlich der Pyrolyse eine Schrumpfung um bis zu etwa 70 Vol.-% erfährt.

Die DE 23 26 937 C2 beschreibt ein Verfahren zur Herstellung eines porösen Formteils, indem zunächst ein Polymer-Formteil durch Gießen flüssiger Gießharze in Gegenwart eines bei höheren Temperaturen flüchtigen Treibmittels vorgeformt und das solchermaßen vorgeformte Polymer-Formteil durch Pyrolyse in einen kohlenstoffhaltigen Körper umgewandelt wird, wobei das Treibmittel in dem fertigen Körper Poren hinterläßt. Ein Zusatz von Verstärkungsfasern ist nicht vorgesehen, weshalb die mechanische Festigkeit, insbesondere die Verschleiß- und Abtriebsfestigkeit, des Formteils zu wünschen übrig läßt. Insbesondere wurde festgestellt, daß bei einer Vielzahl von zur Erzeugung des Polymer-Formteils eingesetzten Polymeren das pyrolysierte Formteil schon bei einer sehr geringen mechanischen Einwirkung versagt.

Die US 2001/0003576 A1 beschreibt ein Verfahren zur Herstellung von zumindest einen Anteil von elementarem Kohlenstoff aufweisenden Formteilen, indem ein Polymer-Formteil unter Zugabe von Verstärkungsfasern sowie gegebenenfalls unter Zusatz von Hilfsstoffen geformt, das Polymer-Formteil anschließend unter zumindest teilweiser Umwandlung seine Polymermatrix in elementaren Kohlenstoff pyrolysiert und das pyrolysierte Formteil abgekühlt wird, sowie ein solchermaßen hergestelltes Formteil. Soweit dem Formteil Verstärkungsfasern zugesetzt werden sollen, sind ausschließlich synthetische Fasern, wie Carbon-, Keramik- oder Metallfasern vorgesehen. Ferner können synthetische Füllstoffe, wie Partikel und Pulver der vorgenannten Materialien sowie Graphit eingesetzt werden. Zwar führt das bekannte Verfahren insbesondere beim Einsatz der genannten Verstärkungsfasern zu einem qualitativ hochwertigen Formteil, doch ist es gleichwohl mit einigen Nachteilen behaftet. Zum einen sind die eingesetzten Verstärkungsfasern verhältnismäßig teuer, wobei im Falle von Metall- und Keramikfasern ein verhältnismäßig hohes Gewicht hinzukommt. Darüber hinaus besitzen die gemäß der US 2001/003576 A1 vorgesehenen Verstärkungsfasern eine sehr hohe Steifigkeit und lassen sich infolgedessen oft nicht einwandfrei in die Polymermatrix des Formteils einarbeiten. Insbesondere weisen die steifen und harten Fasern eine abrasive Wirkung auf Kunststoffverarbeitungsmaschinen auf, was vor allem im Falle einer thermoplastischen Verarbeitung mittels Extrudern oder Spritzgießmaschinen von Nachteil ist. Schließlich kommt es bei der Pyrolyse notwendigerweise zu einer gewissen Schrumpfung der Polymermatrix des Formteils, während seine - thermisch inerten - synthetischen Verstärkungsfasern keine Schrumpfung erfahren, so daß es zu inneren Spannungen im pyrolysierten Formteil und/oder zu einem zumindest oberflächigen Austritt der Fasern aus der pyrolysierten Polymermatrix des Formteils kommen kann.

Die DE 102 01 516 A1 beschreibt ein weiteres Verfahren zur Herstellung leitfähiger Formteile, indem ein Vorformling aus einer Polymermatrix mit hierin eindispergierten, partikel- oder faserförmigen Füllstoffen aus einem leitfähigen Material dadurch bereichsweise pyrolysiert wird, indem der Vorformling mit elektromagnetischer Strahlung bestrahlt oder mit elektrischer Spannung beaufschlagt wird, so daß zwischen den leitfähigen Füllstoffpartikeln Lichtbögen erzeugt werden. Auch dieses Verfahren ermöglicht zwar die Herstellung qualitativ hochwertiger Formteile mit sehr guten mechanischen und elektrischen Eigenschaften, doch gilt im Hinblick auf die Nachteile im wesentlichen das oben zur US 2001/0003576 A1 gesagte. Hinzukommt, daß notwendigerweise leitfähige Füllstoffe, wie Metalle, eingesetzt werden müssen, andernfalls das beschriebene Verfahren nicht funktionieren würde.

Der US 3 825 460 A ist ein Verfahren zur Herstellung von zumindest einen Anteil von elementarem Kohlenstoff enthältenden Formteilen in Form von dünnwandigen, kohlenstoffhaltigen Waben entnehmbar. Hierzu werden pyrolysierbare Gegenstände in Form von Rohren oder Stäben geeigneten Querschnittes mit einem ebenfalls pyrolysierbaren Material beschichtet und werden die beschichteten Stäbe anschließend pyrolysiert. Als pyrolysierbare Materialien sind neben Papier und Holz duroplastische Harze, wie Phenolformaldehydharze, vorgesehen, welche gegebenenfalls Cellulosefaser enthalten können.

In der US 4 938 942 A geht es um ein Verfahren zur Herstel-, lung eines Kohlenstoff-Graphit-Formteils, insbesondere zum Einsatz in elektrochemischen Zellen. Hierzu wird ein flächiger Vorformling mit einem pyrolysierbaren duroplastischen Harz sowie Cellulosefasern hergestellt und wird dieser Vorformling in nicht oxidierender Atmosphäre zweistufig pyrolysiert, um sowohl das Harz als auch die Cellulosefasern zu verkohlen. Das Material des Vorformlings enthält zusätzlich zu dem duroplastischen Harz, z.B. Phenolharz, eine bor- und sauerstoffhaltige anorganische Verbindung, z.B. Borsäure (H₃BO₄).

Der 21 31 792 A1 ist schließlich gleichfalls ein Verfahren zur Herstellung von kohlenstoffhaltigen Formteilen entnehmbar, indem ein sowohl kohlenstoffhaltige Feststoffe als auch ein härtbares, duroplastisches Bindemittel enthaltendes Gemisch pyrolysiert wird. Als kohlenstoffhaltige Feststoffe sind Cellulosemehl oder -schliff vorgesehen, während als härtbare Bindemittel duroplastische Kunstharze in Form von Phenolformaldehyd- oder Furanharzen eingesetzt werden. Auch in diesem Fall wird ein Vorformling vorab hergestellt und anschließend bei bis zu 1050°C pyrolysiert.

Indes ist bei den Verfahren gemäß US 3 825 460 A, US 4 938 942 A und DE 21 31 792 A1 der Einsatz der an der Herstellung des Formteils bzw. Vorformlings beteiligten Polymere auf Duroplasten beschränkt, welche gegenüber thermoplastisch verarbeitbaren Polymeren aufwendiger herstellbar sind.

Der Erfindung liegt die Aufgabe zugrunde, unter Vermeidung der vorgenannten Nachteile ein einfaches und kostengünstiges Verfahren zur Herstellung qualitativ hochwertiger, insbesondere elektrisch leitfähiger Formteile der eingangs genannten Art mit praktisch beliebiger Formgebung vorzuschlagen.

Diese Aufgabe wird erfindungsgemäß bei einem Verfahren der eingangs genannten Art dadurch gelöst, daß unter Wärmeeinwirkung plastifizierbare, aber ausschließlich unter Einwirkung von Druck verformbare, natürliche Polymere, insbesondere aus der Gruppe Lignin, Ligninderivate, Stärke, Stärkederivate, Schellack, Proteine oder Mischungen hiervon, eingesetzt werden.

Das erfindungsgemäße Verfahren ermöglicht die Herstellung von Formteilen mit praktisch beliebigen Formen und Abmessungen entsprechend den eingesetzten Spritz-, Gießformen oder dergleichen zur Herstellung des Polymer-Formteils. Durch die Pyrolyse zumindest eines Anteils der Polymermatrix des durch beliebige, in der Kunststoffverarbeitung bekannte Verfahren erhaltenen Polymer-Formteils und der damit verbundenen Umwandlung zumindest eines Teiles seiner Polymermatrix in elementaren Kohlenstoff läßt sich eine hohe elektrische Leitfähigkeit erreichen, welche zumindest etwa der Leitfähigkeit von hochgefüllten Polymer-Formteilen mit einem Anteil von 60 Mass.-% Ruß oder Graphit entspricht. Demgegenüber weist das erfindungsgemäße Formteil aufgrund seines Kohlenstoffanteils, insbesondere in Form von sogenanntem pyrolytischen Kohlenstoff (Pyrokohlenstoff), mit den in der pyrolysierten Kohlenstoff-/Polymermatrix erhaltenen Faserstrukturen jedoch eine ungleich höhere mechanische Festigkeit, Verschleißfestigkeit und Abriebfestigkeit auf und ist gegenüber korrosiven Materialien inert. Entsprechendes gilt gegenüber hohen Temperaturen bis in den Bereich des Flammpunktes von elementarem Kohlenstoff.

Das erfindungsgemäße Verfahren gewährleistet des weiteren eine Herstellung von zumindest einen Anteil von elementarem Kohlenstoff enthaltenden, faserverstärkten Formteilen unter weitestgehender Vermeidung einer insbesondere spanabhebenden Nachbearbeitung, wobei sich eine bei der Pyrolyse auftretende Schrumpfung um etwa 70 Vol.-% (entsprechend einer linearen Schrumpfung um etwa 30% in jede Raumrichtung) in Abhängigkeit der Pyrolysebedingungen und des eingesetzten Polymers exakt einstellen läßt. Insbesondere wird die Formteilgeometrie als solche bei der Schrumpfung überraschenderweise praktisch nicht verändert, so daß das Polymer-Formteil in entsprechend größeren Dimensionen geformt werden kann und bei der anschließenden Pyrolyse anläßlich eines definierten Schrumpfungsvorgangs seine endgültigen, gewünschten Dimensionen erhält. Weitere Vorteile der erfindungsgemäßen Formteile bestehen in einer in jeder Raumrichtung identischen elektrischen Leitfähigkeit (demgegenüber ist z.B. Graphit vornehmlich parallel zu seinen Kohlenstoffschichten leitend) und in einer verhältnismäßig seringen Dichte von etwa 1,4 g/cm³ (demgegenüber weist z.B. Graphit eine Dichte von 2,2 g/cm³ auf), was in einem relativ niedrigen Gewicht des erfindungsgemäßen Formteils resultiert.

Durch den erfindungsgemäßen Einsatz von Naturfasern anläßlich der Herstellung des Polymer-Formteils und deren anschließenden Pyrolyse gemeinsam mit der Polymermatrix des Polymer-Formteils unter Bildung des pyrolysierten Formteils lassen sich die Herstellungskosten gegenüber einem Einsatz synthetischer Fasern beträchtlich senken, da die Naturfasern um mehr als 50% preiswerter sind als synthetische Verstärkungsfasern, wie Carbon-, Metall- oder Keramikfasern. Hinzu kommt zumindest gegenüber Metall- und Keramikfasern eine erhebliche Gewichtseinsparung. Des weiteren sind die erfindungsgemäß eingesetzten natürlichen Verstärkungsfasern relativ nachgiebig und weich und lassen sich in plastifizierbare Polymerschmelzen einwandfrei einarbeiten, ohne auf die entsprechenden Verarbeitungsmaschinen abrasiv bzw. verschleißend zu wirken. Ferner zeigen die Naturfasern bei der Pyrolyse - ebenso wie die Polymermatrix - einen gewissen Schrumpfungseffekt, so daß Spannungen in dem erhaltenen Formteil weitgehend vermieden oder jedenfalls verringert werden können und eine einwandfreie Oberfläche des pyrolysierten, faserverstärkten Formteils erzielt wird, ohne daß nachträgliche, z.B. spanabhebende Behandlungen erforderlich sind. Die Naturfasern können im übrigen je nach Anwendunggebiet des Formteils in Form von Lang- oder Kurzschnittfasern, in mehlartiger Konsistenz oder auch in Form eines Geflechtes, Gewebes, Gewirkes, Gestrickes, Geleges, Vlieses oder dergleichen zugesetzt werden.

Bei der Herstellung des naturfaserverstärkten Polymer-Formteils können erforderlichenfalls beliebige, in der Polymertechnik bekannte Hilfsstoffe, wie Vernetzungsmittel, Weichmacher, Formtrennmittel, Stabilisatoren und dergleichen, zugesetzt werden, wobei solche Verarbeitungshilfsmittel zweckmäßig aus der Gruppe der organischen, kohlenstoffhaltigen und folglich ebenfalls pyrolysierbaren Additive gewählt werden. Die anschließende Pyrolyse geschieht definitionsgemäß unter weitestgehendem Ausschluß von Sauerstoff bei erhöhter Temperatur.

Aufgrund des erfindungsgemäßen Einsatzes eines unter Wärmeeinwirkung plastifizierbaren, aber ausschließlich unter Druck verformbaren Polymers wird die Polymermatrix eines solchen Polymer-Formteils während der anschließenden Pyrolyse zwar erweicht, doch ist aufgrund einer hinreichenden Wärmeformbeständigkeit bei Vermeidung von mechanischen Einwirkungen sichergestellt, daß ein solches Polymer-Formteil bei der Pyrolyse im erweichten Zustand infolge seines Eigengewichtes nicht verformt wird oder gar "zerfließt", sondern entsprechend einem duroplastischen Polymer-Formteil lediglich ein definiertes Schrumpfungsverhalten unter Aufrechterhaltung seiner Gestalt aufweist. Indes ermöglicht das erfindungsgemäße Verfahren auch den Einsatz von solchen thermoplastischen Polymeren, welche bei Erwärmung in einen schmelzflüssigen Zustand übergehen, sofern diese beispielsweise mit geeigneten Vernetzungsmitteln, Füllstoffen und/oder insbesondere Verstärkungsfasern versetzt werden, wie es weiter unten näher erläutert ist, so daß auch in diesem Fall sichergestellt ist, daß das Polymer-Formteil bei der Pyrolyse seine Formgebung beibehält und lediglich einem definierten Schrumpfungsvorgang unterworfen wird. Alternativ oder zusätzlich kann insbesondere bei solchen thermoplastischen Polymeren auch ein geeignetes Temperaturprogramm anläßlich der Pyrolyse gewählt werden, welches sicherstellt, daß die thermoplastische Polymermatrix des Polymer-Formteils pyrolysiert wird, bevor es zu einem Zerfließen der Polymermatrix kommt.

Für das zur Herstellung des Polymer-Formteils eingesetzte Polymer können vorzugsweise natürliche Polymere, insbesondere aus der Gruppe Lignin, Ligninderivate, Stärke, Stärkederivate, Schellack, Proteine oder Mischungen hiervon; vorgesehen sein. Der Einsatz solcher - überwiegend thermoplastischer - natürlicher Polymere ist überdies im Hinblick auf eine erhöhte Umweltfreundlichkeit erwünscht, da die natürlichen Ressourcen geschont werden und natürliche Kunststoffe eine neutrale CO₂-Bilanz aufweisen. Selbstverständlich ist jedoch grundsätzlich auch der Einsatz synthetischer Polymere oder Polymermischungen (Polymer-Blends) von duroplastischen und/oder thermoplastischen Polymeren möglich.

Eine bevorzugte Ausführung sieht vor, daß das naturfaserverstärkte Polymer-Formteil aus wenigstens einem unter Wärmeeinwirkung plastifizierbaren, aber ausschließlich unter. Einwirkung von Druck verformbaren Polymer durch Extrudieren, Preßformen oder beliebige andere thermoplastische Verarbeitungsverfahren hergestellt wird.

Die Pyrolyse geschieht je nach eingesetztem Polymermaterial zweckmäßig bei einer Temperatur zwischen 300°C und 2000°C, insbesondere zwischen 800°C und 1200°C, wobei - wie bereits angedeutet - der gewünschte Kohlenstoffanteil des Endproduktes und die hiermit einhergehende Schrumpfung durch Auswahl eines entsprechenden Temperaturprogramms und/oder Einstellung der Verweilzeit des Polymer-Formteils unter den Pyrolysebedingungen gesteuert werden kann.

Während die Pyrolyse selbstverständlich auch unter Vakuum oder zumindest bei Unterdruck erfolgen kann, ist in bevorzugter Ausführung vorgesehen, daß die Pyrolyse unter Inertgasatmosphäre, z.B. unter Stickstoff-, Kohlendioxid-, Edelgas-, insbesondere Argonatmosphäre, oder dergleichen, durchgeführt wird.

Der Kohlenstoffanteil des Formteils wird durch entsprechende Wahl der Temperatur und/oder der Verweilzeit der Pyrolysebehandlung bevorzugt auf wenigstens 80 Mass.-%,insbesondere auf wenigstens 90 Mass.-%, bezogen auf das pyrolysierte Formteil eingestellt, wobei insbesondere auch die Herstellung praktisch vollständig pyrolysierter Formteile mit einem Anteil an elementarem Kohlenstoff im Bereich von 100 Mass.-% möglich ist. Ein solches Formteil besteht praktisch gänzlich aus einem mechanisch stabilen und chemisch hoch inerten, elektrisch aktiven Material.

In vorteilhafter Ausführung ist vorgesehen, daß die natürlichen Verstärkungsfasern, welche bei der Pyrolyse des Prolymer-Formteils gemeinsam mit der Polymermatrix pyrolysiert werden, so daß Kohlenstoffstrukturen erzielt werden, welche das pyrolysierte Formteil insgesamt verfestigen, aus der Gruppe Cellulose-, Hanf-, Flachs-, Kokos-, Kenaf-, Nessel-, Sisal-, Miscanthus-, Ramie-, Baumwoll-, Holzfasern oder Mischungen hiervon eingesetzt werden. Dabei ist insbesondere der Einsatz von Cellulosefasern vorteilhaft, welche während der Pyrolyse des faserverstärkten Polymer-Formteils zu hochfesten Carbonfasern umgewandelt werden können. Dies eröffnet die Möglichkeit einer in situ Umwandlung der Naturfasern in Carbonfasern anläßlich der Pyrolyse, so daß erfindungsgemäß die Herstellung eines carbonfaserverstärkten, pyrolysierten Formteils unter Vermeidung sämtlicher, mit einem Einsatz von Carbonfasern von vorn herein verbundener Nachteilen möglich ist.

Die natürlichen Verstärkungsfasern werden zweckmäßig mit einem Anteil zwischen 5 Mass.-% und 95 Mass.-%, insbesondere zwischen 30 Mass.-% und 70 Mass.-%, bezogen auf das Polymer-Formteil eingesetzt.

Während eine bevorzugte Ausführungsform vorsieht, daß ein kompaktes Polymer-Formteil geformt und dieses anschließend zu einem kompakten Formteil pyrolysiert wird, sieht eine andere bevorzugte Ausführungsform vor, daß dem Polymer wenigstens ein Treibmittel zugesetzt und das Treibmittel während der Formgebung des Polymer-Formteils und/oder während der Pyrolyse desselben unter Erhalt eines pyrolysierten, porösen Formteils aktiviert wird. Die Porosität bzw. die Porengröße lassen sich hierbei durch die Treibmittelmenge bzw. die Verteilung desselben in der Polymermatrix des vorgefertigten Polymer-Formteils einstellen. In vielen Fällen ist es vorteilhaft, das Treibmittel bereits dem plastifizierbaren Polymer zuzusetzen und während der Formgebung des Polymer-Formteils, d.h. vor der Pyrolyse, zu aktivieren, da die Polymermatrix in diesem Fall noch zumindest teilweise flüssig bzw. viskos ist, so daß sich eine sehr homogene Porenstruktur ausbilden kann.

Dem Polymer wird zweckmäßig ein thermisch aktivierbares Treibmittel zugesetzt, wobei grundsätzlich beliebige bekannte Vertreter solcher Treibmittel in Betracht kommen.

Im Falle der Herstellung eines solchen pyrolysierten, porösen Formteils ist in Weiterbildung vorgesehen, daß das Formteil mit wenigstens einem keramisierbaren Ausgangsstoff in flüssiger und/oder gasförmiger Phase infiltriert und die Keramik in den Poren und gegebenenfalls auch auf der Oberfläche des pyrolysierten Formteils abgeschieden wird. Eine solche Keramisierung verleiht dem erfindungsgemäßen Formteil außerordentlich gute mechanische Werkstoffeigenschaften, wie insbesondere eine hohe mechanische Festigkeit, eine hohe Verschleißfestigkeit und eine hohe Härte sowie eine Temperaturstabilität bis weit über 600°C. Auch im Falle einer solchen Keramisierung behält das Formteil seine durch den Formvorgang des Polymer-Formteils vor der Pyrolyse verliehene Formgebung, so daß eine einfache und kostengünstige Herstellung solcher Hochleistungsbauteile unter weitestgehender Vermeidung einer spanenden Nachbearbeitung möglich ist. Andererseits kann im Falle von Präzisionsbauteilen selbstverständlich auch eine solche erwünscht sein, um den jeweils geforderten, minimalen Toleranzen zu genügen. Indes werden auch dann durch die sehr exakte Formgebung des Formteils bereits anläßlich der Herstellung des Polymer-Formteils die Bearbeitungszeiten einer solchen Nachbearbeitung gering gehalten.

Die Keramik kann je nach Anwendungsfall des Formteils beispielsweise aus der Gruppe Siliciumcarbid (SiC), mit Silicium infiltriertes Siliciumcarbid (Si/SiC), Siliciumnitrid (SiN, Si₃N₄), Borcarbid (B₄C), Bornitrid (BN), Titancarbid (TiC), Titannitrid (TiN), Siliciumoxid (SiO, SiO₂), Zirkoniumoxid (ZrO₂), Aluminiumoxid (Al₂O₃) oder Mischungen hieraus ausgewählt werden.

Während die Keramik einerseits - wie bereits angedeutet - in flüssiger Phase in die Poren eingebracht und dort abgeschieden werden kann, was beispielsweise durch Infiltrieren des porösen Formkörpers mit flüssigem Siliciumoxid bzw. -dioxid geschehen kann, ist in Weiterbildung vorgesehen, daß die Keramik mittels physikalischer Gasphasenabscheidung (physical vapour deposition, PVD), chemischer Gasphasenabscheidung (chemical vapour deposition, CVD) oder thermischer Spritzverfahren auf dem pyrolysierten, porösen Formteil abgeschieden wird.

PVD-, CVD- sowie thermische Spritzverfahren sind als solche bekannt. Mit PVD-Verfahren sind solche Verfahren angesprochen, bei welchen das Keramikmaterial im Vakuum durch rein physikalische-Methoden in die Gasphase überführt und nach Infiltration des porösen Formteils in den Poren und gegebenenfalls auch an der Oberfläche desselben abgeschieden wird. Es kommen im wesentlichen drei verschiedene Verfahrensvarianten in Frage: Das Beschichtungsmaterial kann einerseits im Hochvakuum in die Poren des pyrolysierten Formteils und gegebenenfalls auch auf dessen Oberfläche aufgedampft werden, wobei es bis zum Übergang entweder vom festen über den flüssigen in den gasförmigen Zustand oder direkt vom festen in den gasförmigen Zustand mittels elektrischer Widerstandsheizungen, Elektronen- oder Laserbeschuß, Lichtbogenverdampfen oder dergleichen erhitzt wird. Stattdessen kommt auch das sogenannte Sputtering in Frage, bei welchem ein aus dem jeweiligen Beschichtungsmaterial bestehendes festes Target im Vakuum mit engergiereichen Ionen, z.B. Edelgasionen, insbesondere Argonionen, zerstäubt wird, wobei als Ionenquelle beispielsweise ein Edelgasplasma verwendet wird. Schließlich kann ein aus dem jeweiligen Beschichtungsmaterial bestehendes Target auch unter Vakuum mit Ionenstrahlen beschossen, in den gasförmigen Zustand überführt und in den Poren des Formteils abgeschieden werden. Selbstverständlich können die genannten PVD-Verfahren auch kombiniert werden.

Demgegenüber laufen im Falle des Einsatzes eines CVD-Verfahrens chemische Reaktionen ab. Hierbei werden die bei Temperaturen von etwa 200°C bis 2000°C mittels thermischer, plasma-, photonen- und laseraktivierter Gasphasenabscheidung erzeugten Gaskomponenten mit einem inerten Trägergas, z.B. Argon, in der Regel bei Unterdruck in eine Reaktionskammer überführt, in welcher die chemische Reaktion stattfindet. Die dabei gebildeten keramischen Feststoffkomponenten werden in den Poren des Formteils und gegebenenfalls auch an der Oberfläche desselben abgeschieden. Die flüchtigen Reaktionsprodukte werden mit dem Trägergas abgeführt.

Die keramische Beschichtung des porösen Formteils kann auch mittels bekannter thermischer Spritzverfahren durch Strahl, Flüssigkeit, Gas oder elektrische Gasentladung, wie Laser-, Schmelzbad-, Flamm-, Detonations-, Hochgeschwindigkeits-, Lichtbogen-, Plasmaspritzen oder dergleichen geschehen, wobei sie z.B. mittels eines Plasmaspritzverfahrens aufgebracht werden kann. Hierbei wird ein festes Target durch Anlegen eines hochfrequenten elektromagnetischen Feldes und damit verbundenem Ionisieren eines Gases, z.B. Luft, Sauerstoff, Stickstoff, Wasserstoff, Edelgase etc., mittels eines Plasmabrenners erhitzt und in die Gasphase überführt. Das Target kann beispielsweise aus dem gewünschten Beschichtungsmaterial bestehen und rein physikalisch in die Gasphase überführt und in den Poren des Formteils abgeschieden werden. Das Target kann alternativ auch aus einem oder mehreren Ausgangsstoffen bestehen, aus welchen die Keramik durch chemische Reaktion in bzw. mit dem Plasma erst gebildet wird. Das Target kann z.B. aus Silicium bestehen und durch Reaktion mit dem ionisierten Gas, z.B. Stickstoff, als Siliciumnitrid in den Poren des Formteils abgeschieden werden.

Im übrigen sei darauf hingewiesen, daß zur Abscheidung der Keramik grundsätzlich auch andere, beliebige bekannte Verfahren denkbar sind.

Das erfindungsgemäße Verfahren ist zur Herstellung von Formteilen für viele Anwendungsgebiete geeignet. So bietet sich dieses aufgrund der elektrischen Leitfähigkeit und der guten mechanischen Werkstoffeigenschaften der erzeugten Formteil, insbesondere ihrer hohen Druck-, Verschleiß- und Abriebfestigkeit, sowie im Hinblick auf ihre chemische Inertheit gegenüber korrosiven Materialien insbesondere zur Herstellung von Formteilen in Form von Elektroden oder Bipolarplatten, z.B. zur Anwendung in einem Elektroden-Stack für Batterien, Akkumulatoren bzw. Brennstoffzellen an, wobei problemlos Leitfähigkeiten im Bereich von 100 S/cm erreicht werden.

Ferner lassen sich beispielsweise Formteile in praktisch beliebigen Formen und in beliebigen äußeren Abmessungen zur Abschirmung von elektromagnetischen Wellen herstellen.

Sofern das mittels des erfindungsgemäßen Verfahrens erzeugte Formteil aus einem infolge des Einsatzes von Treibmitteln porösen Polymer-Formteil und anschließender Pyrolyse desselben erhalten worden ist, bietet es sich weiterhin als Filterelement an, wobei es aufgrund seiner chemischen Inertheit insbesondere auch für korrosive und/oder heiße Fluide geeignet ist. Aufgrund seiner elektrischen Leitfähigkeit läßt sich ein solches Filterelement ferner mit einer elektrischen Spannung oder einem elektrischen Strom beaufschlagen, sofern dies bei speziellen Filterprozessen erwünscht ist.

Ist das poröse Formteil zusätzlich mit einer keramischen Beschichtung versehen worden, so läßt es sich als beliebiges mechanisch und/oder thermisch hoch beanspruchtes Bauteil einsetzen, z.B. für Hitzeschilde von Flugkörpern in der Luft- und Raumfahrt, als Bremsscheibe für Fahrzeuge, insbesondere Kraftfahrzeuge, sowie als Maschinen- oder Turbinenelement von Kraftwerken oder Reaktoren

Nachstehend ist die Erfindung anhand von Ausführungsbeispielen näher erläutert:

### Beispiel 1:

Es werden pulverförmiges Lignin und/oder pulverförmige Ligninderivate und natürliche Verstärkungsfasern, beispielsweise Cellulosefasern, mechanisch zu einer homogenen Mischung verarbeitet. Dabei beträgt der Anteil an Cellulosefasern beispielsweise etwa 40 Mass.-% und der Anteil an Lignin bzw. seiner Derivate z.B. etwa 60 Mass.-%. Gegebenenfalls können aus der Polymertechnik bekannte Hilfsstoffe zugesetzt werden. Die Mischung wird in einer Heißpresse plastifiziert und unter Erhalt eines plattenförmigen Polymer-Formteil verpreßt. Alternativ kann eine Extrusion der Mischung zu dem Polymer-Formteil vorgesehen sein.

Anschließend wird das naturfaserverstärkte Polymer-Formteil unter Schutzgasatmosphäre, z.B. Stickstoff, Kohlendioxid, Edelgas oder dergleichen, bei etwa 950°C pyrolysiert, bis praktisch die gesamte Polymermatrix in Pyrokohlenstoff und die Cellulosefasern in Carbonfasern umgewandelt worden sind. Dabei erfährt das Formteil eine Schrumpfung um etwa 70 Vol.-% unter ansonsten Aufrechterhaltung seiner Gestalt.

Das derart erhaltene Formteil besteht annähernd zu 100% aus elektrisch aktivem Material (Kohlenstoff/Carbonfasern) und weist eine Leitfähigkeit im Bereich von 100 S/cm auf. Es ist aufgrund seiner hohen chemischen Inertheit nach Abkühlung desselben insbesondere als Elektrode bzw. Bipolarplatte für Batterien bzw. Brennstoffzellen geeignet.

### Beispiel 2:

Die Mischung gemäß Beispiel 1 wird zusätzlich mit einem Treibmittel, z.B. Natriumbicarbonat (Na₂CO₃), versetzt und mittels einer Heißpresse zu einem Polymer-Formteil verpreßt. Dabei wird das Treibmittel thermisch, aktiviert und zerfällt unter Bildung von Kohlendioxid (CO₂), so daß ein poröses Polymer-Formteil erhalten wird. Letzteres wird entsprechend Beispiel 2 pyrolysiert und abgekühlt.

Anschließend wird das pyrolysierte Formteil sowohl oberflächig, als auch innenseitig seiner Poren mit einer keramischen Schicht aus gegebenenfalls kohlenstoffaserverstärktem Siliciumcarbid (SiC) beschichtet. Hierzu wird das poröse Formteil beispielsweise bei etwa 1600°C mit einer Siliciumdioxidschmelze infiltriert, welche oberflächig mit der Pyrokohlenstoffmatrix des Formteils reagiert, so daß eine aus Siliciumcarbid bestehende Beschichtung des Formteils gebildet wird. Das sowohl mechanisch als auch thermisch höchst beanspruchbare Bauteil kann - je nach seiner Formgebung in der Kavität der verwendeten Heißpresse - als Hitzeschild für Flugkörper, Bremsscheiben für Fahrzeuge etc. dienen.

## Patentansprüche

1. Verfahren zur Herstellung von zumindest einen Anteil von elementarem Kohlenstoff aufweisenden Formteilen, indem ein Polymer-Formteil aus wenigstens einem Polymer unter Zugabe von natürlichen Verstärkungsfasern sowie gegebenenfalls unter Zusatz von Hilfsstoffen geformt und das Polymer-Formteil anschließend unter zumindest teilweiser Umwandlung seiner Polymermatrix in element ren Kohlenstoff pyrolysiert wird, wobei die Naturfasern gemeinsam mit der Polymermatrix pyrolysiert werden, und wonach das pyrolysierte Formteil abgekühlt wird, **dadurch gekennzeichnet, daß** unter Wärmeeinwirkung plastifizierbare, aber ausschließlich unter Einwirkung von Druck verformbare, natürliche Polymere, insbesondere aus der Gruppe Lignin, Ligninderivate, Stärke, Stärkederivate, Schellack, Proteine oder Mischungen hiervon, eingesetzt werden.

2. Verfahren nach Anspruch 1, **dadurch gekennzeichnet, daß** das naturfaserverstärkte Polymer-Formteil aus wenigstens einem unter Wärmeeinwirkung plastifizierbaren, aber ausschließlich unter Einwirkung von Druck verformbaren Polymer durch Extrudieren oder Preßformen hergestellt wird.

3. Verfahren nach Anspruch 1 oder 2, **dadurch gekennzeichnet, daß** die Pyrolyse bei einer Temperatur zwischen 300°C und 2000°C, insbesondere zwischen 800°C und 1200°C, durchgeführt wird.

4. Verfahren nach einem der Ansprüche 1 bis 3, **dadurch gekennzeichnet, daß** die Pyrolyse unter Inertgasatmosphäre durchgeführt wird.

5. Verfahren nach einem der Ansprüche 1 bis 4, **dadurch gekennzeichnet, daß** der Anteil an elementarem Kohlenstoff des Formteils durch entsprechende Wahl der Temperatur und/oder Verweilzeit der pyrolytischen Behandlung auf wenigstens 80 Mass.-%, insbesondere auf wenigstens 90 Mass.-%, bezogen auf das pyrolysierte Formteil eingestellt wird.

6. Verfahren nach einem der Ansprüche 1 bis 5, **dadurch gekennzeichnet, daß** natürliche Verstärkungsfasern aus der Gruppe Cellulose-, Hanf-, Flachs-, Kokos-, Kenaf-, Nessel-, Sisal-, Miscanthus-, Ramie-, Baumwoll-, Holzfasern oder Mischungen hiervon eingesetzt werden.

7. Verfahren nach einem der Ansprüche 1 bis 6, **dadurch gekennzeichnet, daß** ein Anteil von natürlichen Verstärkungsfasern zwischen 5 Mass.-% und 95 Mass.-%, insbesondere zwischen 30 Mass.-% und 70 Mass.-%, bezogen auf das Polymer-Formteil eingesetzt wird.

8. Verfahren nach einem der Ansprüche 1 bis 7, **dadurch gekennzeichnet, daß** ein kompaktes Polymer-Formteil geformt und dieses anschließend zu einem kompakten Formteil pyrolysiert wird.

9. Verfahren nach einem der Ansprüche 1 bis 8, **dadurch gekennzeichnet, daß** dem Polymer wenigstens ein Treibmittel zugesetzt und das Treibmittel während der Formgebung des Polymer-Formteils und/oder während der Pyrolyse desselben unter Erhalt eines pyrolysierten, poröse Formteils aktiviert wird.

10. Verfahren nach Anspruch 9, **dadurch gekennzeichnet, daß** dem Polymer ein thermisch aktivierbares Treibmittel zugesetzt wird.

11. Verfahren nach Anspruch 9 oder 10, **dadurch gekennzeichnet, daß** das pyrolysierte, poröse Formteil mit wenigstens einem keramisierbaren Ausgangsstoff in flüssiger und/oder gasförmiger Phase infiltriert und die Keramik in den Poren und gegebenenfalls auch auf der Oberfläche des pyrolysierten Formteils abgeschieden wird.

12. Verfahren nach Anspruch 11, **dadurch gekennzeichnet, daß** die Keramik mittels physikalischer Gasphasenabscheidung (PVD), chemischer Gasphasenabscheidung (CVD) oder thermischer Spritzverfahren auf dem pyrolysierten, porösen Formteil abgeschieden wird.

13. Verfahren nach Anspruch 11 oder 12, **dadurch gekennzeichnet, daß** als Keramik eine Keramik aus der Gruppe Siliciumcarbid (SiC), mit Silicium infiltriertes Siliciumcarbid (Si/ SiC), Siliciumnitrid (SiN, Si₃N₄) Borcarbid (B₄C), Bornitrid (BN), Titancarbid (TiC), Titannitrid (TiN), Siliciumoxid (SiO, SiO₂), Zirkoniumoxid (ZrO₂), Aluminiumoxid (Al₂O₃) oder Mischungen hiervon gewählt wird.

14. Verfahren nach einem der Ansprüche 1 bis 13 zur Herstellung von Formteilen in Form von Elektroden oder Bipolarplatten für Batterien, Akkumulatoren oder Brennstoffzellen.

15. Verfahren nach einem der Ansprüche 1 bis 13 zur Herstellung von Formteilen zur Abschirmung von elektromagnetischen Wellen.

16. Verfahren nach einem der Ansprüche 9 bis 13 zur Herstellung von Formteilen in Form von Filterelementen, insbesondere für korrosive und/oder heiße Fluide.

17. Verfahren nach einem der Ansprüche 11 bis 13 zur Herstellung von Formteilen in Form von mechanisch und/oder thermisch hochbeanspruchten Bauteilen, insbesondere Hitzeschilden für Flugkörper der Luft- und Raumfahrt, Bremsscheiben für Fahrzeuge und Maschinen- oder Turbinenelementen von Kraftwerken oder Reaktoren.

## Claims

1. Method for producing moulded parts which have at least a proportion of elementary carbon in that a polymer moulded part comprising at least one polymer with the addition of natural reinforcing fibres and also if necessary with the addition of auxiliary agents is moulded and the polymer moulded part is pyrolysed subsequently into elementary carbon with at least partial conversion of the polymer matrix thereof, the natural fibres together with the polymer matrix being pyrolysed, and after which the pyrolysed moulded part is cooled, **characterised in that** natural polymers which are plasticisable under the effect of heat, but mouldable exclusively under the effect of pressure, in particular from the group lignin, lignin derivatives, starch, starch derivatives, shellac, proteins or mixtures thereof, are used.

2. Method according to claim 1, **characterised in that** the natural fibre-reinforced polymer moulded part comprising at least one polymer which is plasticisable under the effect of heat, but mouldable exclusively under the effect of pressure, is produced by extrusion or compression moulding.

3. Method according to claim 1 or 2, **characterised in that** the pyrolysis is implemented at a temperature between 300°C and 2000°C, in particular between 800°C and 1200°C.

4. Method according to one of the claims 1 to 3, **characterised in that** the pyrolysis is implemented under an inert gas atmosphere.

5. Method according to one of the claims 1 to 4, **characterised in that** the proportion of elementary carbon of the moulded part is adjusted by corresponding choice of the temperature and/or dwell time of the pyrolytic treatment to at least 80% by mass, in particular to at least 90% by mass, relative to the pyrolysed moulded part.

6. Method according to one of the claims 1 to 5, **characterised in that** natural reinforcing fibres are used from the group cellulose, hemp, flax, coconut, gambo, nettle, sisal, miscanthus, ramie, cotton, wood fibres or mixtures thereof.

7. Method according to one of the claims 1 to 6, **characterised in that** a proportion of natural reinforcing fibres is used between 5% by mass and 95% by mass, in particular between 30% by mass and 70% by mass, relative to the polymer moulded part.

8. Method according to one of the claims 1 to 7, **characterised in that** a compact polymer moulded part is moulded and this is subsequently pyrolysed to form a compact moulded part.

9. Method according to one of the claims 1 to 8, **characterised in that** at least one foaming agent is added to the polymer and the foaming agent is activated during moulding of the polymer moulded part and/or during pyrolysis of the same with a pyrolysed porous moulded part being obtained.

10. Method according to claim 9, **characterised in that** a thermally activatable foaming agent is added to the polymer.

11. Method according to claim 9 or 10, **characterised in that** the pyrolysed porous moulded part is infiltrated with at least one ceramisable starting material in liquid and/or in gaseous phase and the ceramic is deposited in the pores and if necessary also on the surface of the pyrolysed moulded part.

12. Method according to claim 11, **characterised in that** the ceramic is deposited on the pyrolysed porous moulded part by means of physical gas phase deposition (PVD), chemical gas phase deposition (CVD) or thermal gun spraying.

13. Method according to claim 11 or 12, **characterised in that**, as ceramic, a ceramic is chosen from the group silicon carbide (SiC), silicon carbide infiltrated with silicon (Si/SiC), silicon nitride (SiN, Si₃N₄), boron carbide (B₄C), boron nitride (BN), titanium carbide (TiC), titanium nitride (TiN), silicon oxide (SiO, Si0₂), zirconium oxide (ZrO₂), aluminium oxide (Al₂O₃) or mixtures thereof.

14. Method according to one of the claims 1 to 13 for producing moulded parts in the form of electrodes or bipolar plates for batteries, accumulators or fuel cells.

15. Method according to one of the claims 1 to 13 for producing moulded parts for screening of electromagnetic waves.

16. Method according to one of the claims 9 to 13 for producing moulded parts in the form of filter elements, in particular for corrosive and/or hot fluids.

17. Method according to one of the claims 11 to 13 for producing moulded parts in the form of components which are highly stressed mechanically and/or thermally, in particular heat shields for aviation and aerospace missiles, brake discs for vehicles and machine or turbine elements of power stations or reactors.

## Revendications

1. Procédé de fabrication de pièces de forme ayant au moins une partie de carbone élémentaire selon lequel
- on met en forme une pièce de forme en polymère compose d'au moins un polymère avec addition de fibres naturelles de renforcement et le cas échéant adjonction d'adjuvant,
- on pyrolyse la pièce de forme en polymère par au moins une transformation partielle de sa matrice de polymère, en carbone élémentaire,
- on pyrolyse les fibres naturelles en commun avec la matrice de polymère, et
- on refroidit la pièce de forme, pyrolysée,
**caractérisé en qu'**
on utilise des polymères naturels, notamment du groupe lignine, dérivés de lignine, amidon, dérivé de l'amidon, shellac, protéines ou des mélanges de ceux-ci, ces produits étant plastifiables sous l'effet de la chaleur mais déformables exclusivement sous l'action de la pression.

2. Procédé selon la revendication 1,
**caractérisé en ce qu'**
on fabrique, par extrusion ou moulage à la presse, la pièce de forme en polymère renforcé par des fibres naturelles avec au moins un polymère plastifiable sous l'effet de la chaleur mais déformable exclusivement sous l'action de la pression.

3. Procédé selon la revendication 1 ou 2,
**caractérisé en ce qu'**
on effectue la pyrolyse à une température comprise entre 300°C et 2000°C, notamment entre 800°C et 1200°C.

4. Procédé selon l'une des revendications 1 à 3,
**caractérisé en ce qu'**
on effectue la pyrolyse sous une atmosphère de gaz inerte.

5. Procédé selon l'une des revendications 1 à 4,
**caractérisé en ce qu'**
on règle la teneur en carbone élémentaire de la pièce de forme par un choix approprié de la température et/ou du temps de séjour du traitement de pyrolyse à au moins 80 % en masse, notamment à au moins 90 % en masse, rapportés à la pièce de forme, pyrolysée.

6. Procédé selon l'une des revendications 1 à 5,
**caractérisé en ce qu'**
on utilise des fibres naturelles de renforcement du groupe cellulose, lin, chanvre, cocos, kénaf, ortie, sisal, miscanthus, ramie, coton, fibres de bois ou des mélanges de ces fibres.

7. Procédé selon l'une des revendications 1 à 6,
**caractérisé en ce que**
la teneur en fibres naturelles de renforcement représente entre 5 % et 95 % en masse, notamment entre 30 % et 70 % en masse rapportés à la pièce de forme en polymère.

8. Procédé selon l'une des revendications 1 à 7,
**caractérisé en ce qu'**
on moule une pièce de forme compacte en polymère et ensuite on la pyrolyse.

9. Procédé selon l'une des revendications 1 à 8,
**caractérisé en ce qu'**
on ajoute au moins un agent moussant au polymère et on active l'agent moussant pendant la mise en forme de la pièce de forme en polymère et/ou pendant la pyrolyse de celle-ci pour obtenir une pièce de forme poreuse, pyrolysée.

10. Procédé selon la revendication 9,
**caractérisé en ce qu'**
on ajoute au polymère un agent moussant activé par voie thermique.

11. Procédé selon l'une des revendications 9 ou 10,
**caractérisé en ce qu'**
on infiltre la pièce de forme poreuse, pyrolysée avec au moins une matière première susceptible de se transformer en céramique, cette matière première étant en phase liquide et/ou gazeuse et on dépose la matière céramique dans les pores et le cas échéant à la surface de la pièce de forme, pyrolysée.

12. Procédé selon la revendication 11,
**caractérisé en ce qu'**
on dépose la céramique par dépôt physique en phase gazeuse (procédé PVD) par dépôt chimique en phase gazeuse (procédé CVD) ou par pulvérisation thermique sur la pièce de forme, poreuse, pyrolysée.

13. Procédé selon la revendication 11 ou 12,
**caractérisé en ce que**
comme céramique on utilise une céramique du groupe carbure de silicium (SiC), du carbure de silicium infiltré dans du silicium (Si/ SiC), du nitrure de silicium (SiN, Si₃N₄), du carbure de bore (B₄C), du nitrure de bore (BN), du carbure de titane (TiC), du nitrure de titane (TiN), de l'oxyde de silicium (SiO, SiO₂), de l'oxyde de zirconium (ZrO₂), de l'oxyde d'aluminium (Al₂O₃) ou des mélanges de ceux-ci.

14. Procédé selon l'une des revendications 1 à 13 pour la fabrication de pièces de forme ayant la forme d'électrodes ou de plaques bipolaires pour des batteries, accumulateurs ou piles à combustible.

15. Procédé selon l'une des revendications 1 à 13 pour la fabrication de pièces de forme destinées à constituer des écrans contre les ondes électromagnétiques.

16. Procédé selon l'une des revendications 9 à 13 pour la fabrication de pièces de forme constituées par des éléments de filtre, notamment pour des fluides corrosifs et/ou chauds.

17. Procédé selon l'une des revendications 11 à 13 pour la fabrication de pièces de forme constituées par des pièces mécaniques et/ou thermiques fortement sollicitées, notamment des boucliers thermiques pour des engins volants, pour des vols spatiaux ou aériens, des disques de freins de véhicules et des éléments de machines et de turbines pour des centrales électriques ou des réacteurs.
